# EUROPEAN PATENT APPLICATION

(11) **EP 1 222 850 A1**
(43) Date of publication of application: **17.07.2002**
(21) Application number: 02380008.9
(22) Date of filing: 11.01.2002
(51) Int. Cl.: A01D 85/00, A01F 15/00

(54) **Machine for grouping together small bales**

(30) Priority: 15.01.2001 ES 200100079
(71) Applicant: Cusine Barber, Manuel, E-25332 La Fuliola (Lleida) (ES)
(72) Inventor: Cusine Barber, Manuel, E-25332 La Fuliola (Lleida) (ES)
(74) Representative: Ponti Sales, Adelaida

(57) **Abstract**

Comprises a hook (2) for attaching it behind a bundling machine, a platform (3) for picking up the bundles, means (9, 10) for placing the bundles inside a container or cage (4), in such a way that said bundles are grouped together by pushing means (11, 12) until a package is formed, tying devices (13) for said package, means for compacting (11, 12) of the package, and means for opening and closing (14, 15) the container (4) which permit extraction of the package, characterised in that the container or cage (4) is arranged vertically, and in that the means for pushing the bundles and the means for compacting (11, 12) the package are the same, while said machine (1) includes means for positioning (5, 6) the bundles at the entrance to the container (4). The length of the machine is reduced considerably and it is structurally simpler and more functional.

## Description

This invention relates to a machine for grouping together small bundles of hay and the like.

### BACKGROUND OF THE INVENTION

This type of agricultural machine has the objective of grouping together several bundles or rectangular bales of hay or the like of small size in order to compact them and tie them to form a single bundle of larger size or package.

The resulting package provides advantages in the handling and transportation of fodder. Firstly, during the loading process fewer bundles have to be moved in order to fill the body of the lorry or trailer. Secondly, as the new package is submitted to compacting or greater pressure, the specific weight of the load is increased, so that greater weight can be carried in the same volume. Finally, it permits better dispensing and preservation in its distribution and consumption, as when the package is undone for consumption thereof it is divided into smaller tied bundles.

Known in the art are machines for grouping together small bundles for the formation of a larger bundle or package, which machines include a hook for attaching them behind a bundling machine, which supplies the bundles by depositing them on a platform for picking them up, means for placing the bundles inside a container or cage, so that said bundles are grouped together by pushing means until they form a package, tying devices for said package, means for compacting the package which act in the same direction as the pushing means, and means for opening and closing the container which permit removal of the package with greater or lesser difficulty depending on the characteristics of the product.

Such machines have a number of disadvantages.

Firstly, the machines have to be of considerable length owing to the fact that the process of loading and stowing the bundles in the container or cage is carried out in a horizontal direction. As a result it is difficult to move and tow using a bundling machine which is in turn drawn by a tractor.

Secondly, complicated means are necessary for lifting, change of position and pushing the bundles inside the cage and means for subsequent compacting of the package in a direction opposite to said pushing, which makes the structure of the machine more complex.

Moreover, after the compacting process some detensioning of the elements for tying the package takes place, due to the compacting being carried out in a direction opposite to that of the loading.

These are therefore machines which present great complexity in their manufacture and operation, which also increases their cost in the market.

### DESCRIPTION OF THE INVENTION

The objective of the machine of the invention for grouping together small bundles is to solve the disadvantages presented by the devices known in the art, while providing a number of advantages which are described below.

The machine of this invention for grouping together small bundles is characterised in that the container or cage is arranged vertically, and in that the means for pushing the bundles and the means for compacting the package are the same, while the machine includes means for positioning the bundles at the entrance to the container.

Due to the accumulation of the load being arranged in a vertical direction, the length of the grouping machine is reduced considerably, by approximately one half in relation to the present machines, so that movement and towing thereof is much more dynamic. Moreover, the bundle is always in flat position during the handling and compacting process.

The fact that the loading of the bundles into the container and subsequent compacting of the package are carried out with the same means and vertically permits the elimination of other unnecessary means, providing a machine which is structurally simpler and therefore has lower manufacturing costs.

Moreover, this vertical layout prevents detensioning of the package once it has been compacted. This is due to the elements for tying it being tensioned as the first bundles reach the upper part of the receptacle or cage, and because the compacting is carried out from the lower part, as is loading.

Advantageously, the pushing of the bundles and compacting of the package are carried out by an actuator and a horizontal platform that can move vertically.

Thus, the actuator starts up the horizontal platform which raises each layer of bundles, placing them on an upper level until the cage is full, following which it carries out compacting of the package by means of a further action of said platform.

Preferably, the means for positioning the bundles at the entrance to the container include an actuator and an articulated element which permits each bundle to be rotated through ninety degrees on a fixed platform.

Thanks to this characteristic, each bundle is suitably positioned at the entrance to the cage, without there ever being any need to change the natural position of the bundle, which emerges flat from the bundling machine.

Advantageously, it includes an abutment element situated on one side of the fixed platform, thereby ensuring that no bundle moves sideways outside of the aforesaid fixed platform.

Preferably, the means for placing the bundles in the container include an actuator and an articulated element.

When each bundle has been correctly positioned at the entrance to the cage, said actuator moves the articulated element which moves said bundle into the aforesaid cage.

Preferably, the actuators are hydraulic or pneumatic cylinders.

Advantageously, the means of opening and closing the container comprise two gates, one upper and one lower, that open outwards.

The lower gate itself thus serves as a ramp, facilitating unloading of the package, after which said doors close in order to start a new working cycle.

Preferably, the means of opening and closing the container are situated on the rear part of the machine for unloading in relation to the direction of driving.

With this structural arrangement, the package is left situated longitudinally on the ground.

According to another embodiment of this invention, the means of opening and closing the container are situated on one side of the machine for unloading in a direction perpendicular to the driving direction. This embodiment is suitable when working needs require that the package be set down on the ground in a transversal position.

Moreover, the grouping machine can work in two different ways: the first, by attaching it directly to the rear part of a tractor and picking up the bundles deposited on the ground along a loading ramp, and the second, by assembling the grouping machine behind the bundling machine that makes the bundles.

The power supply can be the electrical-hydraulic circuit of the tractor or the action of an independent generating set attached to the machine.

### BRIEF DESCRIPTION OF THE DRAWINGS

In order to assist the description of all that has been set out above, some drawings are attached which, schematically and solely by way of non-restrictive example, show a practical case of embodiment of the grouping machine of the invention for small bundles, in which:

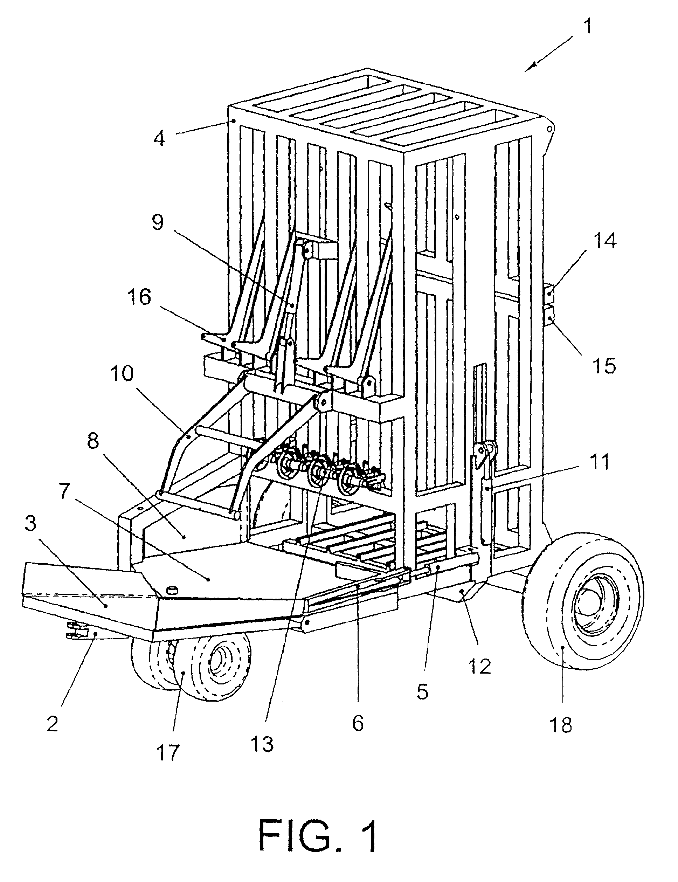

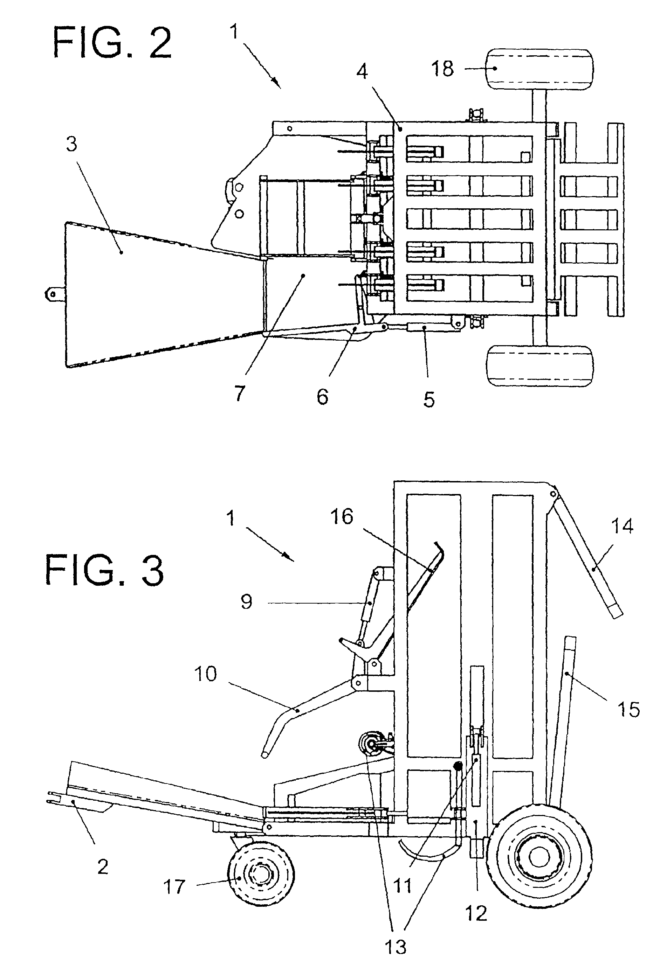

Figure 1 is a perspective view of the grouping machine; Figure 2 is a plan view of the grouping machine; and Figure 3 is an elevation view of the grouping machine.

### DESCRIPTION OF A PREFERRED EMBODIMENT

As Figures 1 to 3 show, the machine 1 for grouping small bundles in order to form a bundle of larger size or a package, comprises a hook 2 for attaching it behind a bundling machine, a platform 3 for picking up the bundles, a container or cage 4 for grouping the bundles together, a hydraulic cylinder 5 which actuates an articulated element 6 which permits each bundle to be rotated through ninety degrees on a fixed platform 7, an abutment element 8 situated on one side of the fixed platform 7, a hydraulic cylinder 9 which actuates an articulated element 10 for placing the bundles in the container 4, a hydraulic cylinder 11 which actuates a vertically moving horizontal platform 12 for pushing the bundles and for subsequent compacting of the package, package tying devices 13, two gates for opening and closing the container 4, one upper gate 14 and another lower gate 15, opening outwards and situated on the rear part of the machine 1 in relation to the driving direction, and a plurality of articulated elements 16 which move together in order to facilitate unloading of the package.

Said grouping machine 1 also includes two front wheels 17 and two rear wheels 18.

The grouping machine operates as follows:

The first bundle which emerges from the bundling machine is situated on the bundle pick-up platform 3, and by means of a traction system said bundle is moved until it reaches the fixed platform 7 and abuts against the articulated element 6.

The bundle enters into contact with an end of stroke device situated on the articulated element 6 and it sends a signal to the cylinder 5 which goes into movement and displaces said articulated element 6, implementing rotation through ninety degrees and positioning the bundle transversally at the entrance to the cage 4. An abutment element 8 mounted vertically on one end of the platform 7 prevents the bundle moving laterally.

Once the cylinder 5 has reached its maximum travel the bundle enters into contact with an end of stroke device and sends a signal to the cylinder 9, which carries out a rotation on the articulated element 10. Said articulated element 10 pushes the bundle to situate it inside the cage 4, which at the same time takes with it the cords of the tying devices 13.

When the cylinder 9 has arrived at its maximum travel leaving the bundle inside the cage 4, said articulated elements 6 and 10 return to its initial position through the cylinders 5 and 9 respectively.

The second bundle arrives at the fixed platform 7 and abuts against the articulated element 6, and the process described for the first bundle is repeated. Once the second bundle has been situated inside the cage 4, the latter moves the first bundle up to the end of stroke which actuates the cylinder 11, which cylinder moves vertically the horizontal platform 12 for pushing and subsequent compacting.

Said horizontal platform 12 raises the first layer of bundles, depositing it on a higher level, and then returns to its initial position when the cylinder 11 has reached its maximum travel, in order to await the next load.

The machine repeats the loading processes and thus fills the cage 4. Once the cage 4 is full the horizontal platform 12 comes into operation through the cylinder 11 in order to carry out the package compacting operation, following which the process of tying the package is carried out by means of the tying devices 13.

When the tying of the package has been completed, the unloading operation begins with opening of the gates 14 and 15. In order to facilitate the unloading, the articulated elements 16 help to incline the package on the gate 15. The package carries on reclining, and when its upper end comes into contact with the ground the package begins to offer resistance to the advance of the tractor, until it is finally left on the ground.

Once the package is no longer in contact with the gate 15 and has been totally deposited on the ground, the gates 14 and 15 close again, leaving the cage 4 ready to start another work cycle.

Independent of the object of this invention are the materials used in manufacturing of the elements which constitute the grouping machine for small bundles described, together with the shapes and dimensions of same and all accessory details that might be presented, which may be replaced by others technically equivalent, as long as they do not affect its essential nature and do not depart from the sphere defined by the claims attached below.

## Claims

1. Machine (1) for grouping small bundles in order to form a bundle of larger size or a package, which comprises a hook (2) for attaching it behind a bundling machine, which supplies the bundles by depositing them on a platform (3) for picking them up, means (9, 10) for placing the bundles inside a container or cage (4), in such a way that said bundles are grouped together by pushing means (11, 12) until a package is formed, tying devices (13) for said package, means for compacting (11, 12) of the package which act in the same direction as the pushing means, and means for opening and closing (14, 15) the container (4) which permit extraction of the package, **characterised in that** the container or cage (4) is arranged vertically, and **in that** the means for pushing the bundles and the means for compacting (11, 12) the package are the same, while said machine (1) includes means for positioning (5, 6) the bundles at the entrance to the container (4).

2. Machine (1) as claimed in Claim 1, **characterised in that** the means for pushing of the bundles and compacting of the package include an actuator (11) and a horizontal platform (12) that can move vertically.

3. Machine (1) as claimed in Claim 1, **characterised in that** the means for positioning the bundles at the entrance to the container include an actuator (5) and an articulated element (6) which permits each bundle to be rotated through ninety degrees on a fixed platform (7).

4. Machine (1) as claimed in Claims 1 and 3, **characterised in that** it includes an abutment element (8) situated on one side of the fixed platform (7).

5. Machine (1) as claimed in Claim 1, **characterised in that** the means for placing the bundles in the container include an actuator (9) and an articulated element (10).

6. Machine (1) as claimed in Claims 2, 3 and 5, **characterised in that** the actuators (5, 9, 11) are hydraulic or pneumatic cylinders.

7. Machine (1) as claimed in Claim 1, **characterised in that** the means of opening and closing the container comprise two gates, one upper (14) and another lower (15), that open outwards.

8. Machine (1) as claimed in Claim 7, **characterised in that** the means of opening and closing (14, 15) the container are situated on the rear part of the machine (1) for unloading in relation to the direction of driving.

9. Machine (1) as claimed in Claim 7, **characterised in that** the means of opening and closing (14, 15) the container are situated on one side of the machine (1) for unloading in a direction perpendicular to the driving direction.
